# EUROPÄISCHE PATENTSCHRIFT

(11) **EP 3 921 920 B1**
(45) Veröffentlichungstag und Bekanntmachung des Hinweises auf die Patenterteilung: **11.02.2026**
(21) Anmeldenummer: 19828204.8
(22) Anmeldetag: 04.12.2019
(51) Int. Cl.: H02K 1/06, H02K 9/00, H02K 11/21

(54) **ELEKTRISCHE MASCHINE MIT EINEM MEHRFUNKTIONALEN SCHEIBENELEMENT FÜR EINEN ROTOR**
ELECTRICAL MACHINE WITH A MULTIFUNCTIONAL DISC ELEMENT FOR A ROTOR
MACHINE ÉLECTRIQUE COMPRENANT UN ÉLÉMENT DE DISQUE MULTIFONCTIONNEL POUR UN ROTOR

(30) Priorität: 07.02.2019 DE 102019103007
(43) Veröffentlichungstag der Anmeldung: 15.12.2021
(73) Patentinhaber: Schaeffler Technologies AG & Co. KG, 91074 Herzogenaurach (DE)
(72) Erfinder: KLEIN, Tobias, 77971 Kippenheim (DE); LEHMANN, Steffen, 76275 Ettlingen (DE); TRINKENSCHUH, Andreas, 77815 Bühl (DE)
(74) Vertreter: Schaeffler Technologies
(86) Internationale Anmeldenummer: PCT/DE2019/101037
(87) Internationale Veröffentlichungsnummer: WO 2020/160715

(56) Entgegenhaltungen:
- DE-A1- 10 243 273
- DE-A1- 102004 033 082
- DE-A1- 102010 033 269
- DE-A1- 102015 216 233
- DE-A1- 102015 216 454
- US-B2- 8 120 227

## Beschreibung

Die Erfindung betrifft eine elektrische Maschine für einen Kraftfahrzeugantriebsstrang, insbesondere für ein hybridisiertes Getriebe (Hybridgetriebe) eines Kraftfahrzeuges, wie eines Pkws, Lkws, Busses oder sonstigen Nutzfahrzeuges.

Allgemein bekannte Hybridgetriebe weisen relativ leistungsfähige elektrische Maschinen auf, deren Effizienz weiter gesteigert werden soll. Insbesondere besteht der Anspruch, eine Lage oder eine Drehzahl des Rotors verlässlich zu erfassen. Des Weiteren soll der Rotor in seinem Zusammenbau möglichst stabil gesichert sein. Auch soll eine verlässliche Kühlung der einzelnen Bestandteile der elektrischen Maschine in jeglichen Betriebszuständen gewährleistet sein.

Aus der DE 102 43 273 A1 ist eine elektrische Maschine bekannt, auf den Oberbegriff des Anspruchs 1 lesbar ist.

Die Aufgabe der Erfindung ist es, eine effizient sowie verlässlich laufende elektrische Maschine für leistungsstarke Anwendungen zur Verfügung zu stellen.

Diese Aufgabe wird erfindungsgemäß durch den Gegenstand des Anspruchs 1 gelöst. Demnach ist eine elektrische Maschine für einen Kraftfahrzeugantriebsstrang umgesetzt, wobei diese elektrische Maschine mit einem Stator, einem relativ zum Stator verdrehbar gelagerten Rotor sowie einer den Rotor drehfest aufnehmenden Triebwelle versehen ist. **In** einer axialen Richtung der Triebwelle neben dem Rotor ist ein aus einem Metallblech bestehendes, ebenfalls drehfest mit der Triebwelle verbundenes Scheibenelement angeordnet, wobei das Scheibenelement eine durch einen Wirbelstromsensor erfassbare Geberkontur und eine Kühlmittelleitkontur zur Umlenkung eines Kühlmittelstromes zu dem Stator hin aufweist sowie mit einer axialen Vorspannkraft gegen eine Stirnseite des Rotors angedrückt ist.

Durch Vorsehen eines solchen Scheibenelementes werden mehrere Funktionen gleichzeitig mit einem einzigen Bauteil realisiert. Eine besonders leistungsfähige elektrische Maschine ist die Folge.

Weitere vorteilhafte Ausführungen sind mit den Unteransprüchen beansprucht und nachfolgend näher erläutert.

Weist die Geberkontur zumindest ein Fenster, vorzugsweise mehrere in einer Umfangsrichtung verteilt angeordnete Fenster, auf, wird die Geberkontur durch eine besonders einfach herstellbare und erfassbare Geometrie bereitgestellt. Weiter bevorzugt ist ein Wirbelstromsensor relativ zu der Geberkontur mit einem bestimmten Spalt in der axialen Richtung versetzt angeordnet.

Hinsichtlich der Kühlmittelleitkontur ist es zudem von Vorteil, wenn diese in einem ersten Abschnitt durch eine Aussparung / einen Freiraum an einer dem Rotor zugewandten (axialen) Seite des Scheibenelementes ausgebildet ist. Dadurch wird der Herstellaufwand der Kühlmittelleitkontur deutlich gesenkt.

Ist die Kühlmittelleitkontur in einem zweiten Abschnitt durch zumindest ein axiales Durchgangsloch, vorzugsweise mehrere in Umfangsrichtung verteilt ausgebildete Durchgangslöcher, ausgebildet, wird das Kühlmittel an einer radialen Außenseite der Kühlmittelleitkontur verlässlich von dem Rotor weg geleitet. Ein möglichst geringer Fluidwiderstand für den Rotor ist die Folge.

Wie bereits erwähnt ist es besonders zweckmäßig, wenn der zweite Abschnitt in radialer Richtung unmittelbar außerhalb des ersten Abschnittes an diesen anschließend vorgesehen ist.

Der Stator ist zweckmäßigerweise mit zumindest einer Windung radial außerhalb und/oder in axialer Richtung auf gleicher Höhe zu einem Austritt der Kühlmittelleitkontur angeordnet.

Erfindungsgemäß ist vorgesehen, dass zumindest eine an dem Rotor axial anliegende Kontaktfläche des Scheibenelementes durch eine präge- oder tiefziehtechnisch erzielte Verformung / Erhebung ausgebildet ist. Dadurch wird die Kontur des Scheibenelementes besonders einfach hergestellt.

Begrenzt eine erste Kontaktfläche die Kühlmittelleitkontur radial von außen, wie in einer ersten Ausführungsform der Erfindung vorgesehen, ist diese geschickt zum Leiten des Kühlmittels weg von dem Rotor eingesetzt.

Eine zweite Kontaktfläche ist erfindungsgemäß in einem demontierten Ausgangszustand (unmontierter Zustand) des Scheibenelementes betrachtet mit einer konischen Erstreckung / Form umgesetzt. (Auch die erste Kontaktfläche ist bevorzugt mit einer solchen konischen Erstreckung / Form umgesetzt und radial außerhalb der zweiten Kontaktfläche angeordnet.

Demnach ist es besonders vorteilhaft, wenn das Scheibenelement unter elastischer Vorspannung mittels eines an der Triebwelle abgestützten Befestigungsmittels, vorzugsweise einer Mutter, gegen den Rotor angedrückt ist. Die federnde Eigenschaft wird insbesondere durch die konische Erstreckung der zweiten Kontaktfläche erreicht. Aufgrund der Ausbildung aus einem Metallblech ist das Scheibenelement gleichzeitig als Vorspannfeder eingesetzt.

Des Weiteren ist es von Vorteil, wenn auf einer dem Scheibenelement axial abgewandten Seite des Rotors ein weiteres Scheibenelement, unter Ausbildung eines Fluidleitelementes, eingesetzt ist. Das Fluidleitelement ist ähnlich, vorzugsweise gleich dem Scheibenelement mit Ausnahme der Geberkontur umgesetzt. Das Fluidleitelement weist vorzugsweise zwei Kontaktflächen (eine erste Kontaktfläche und eine zweite Kontaktfläche) auf, die tiefziehtechnisch realisiert sind. Auch weist die erste und/oder zweite Kontaktfläche weiter bevorzugt eine konische Form auf. Das Fluidleitelement weist ebenfalls eine Kühlmittelleitkontur bestehend aus einem zweiten und einem ersten Abschnitt auf.

Der jeweilige erste Abschnitt der Kühlmittelleitkonturen ist dann vorzugsweise mit einem Kühlmitteleingang / einer Kühlmittelzuführung auf einer radialen Innenseite des Rotors verbunden. Diese Kühlmittelzuführung ist vorzugsweise zumindest teilweise in der Triebwelle eingebracht.

Des Weiteren ist es zweckmäßig, wenn der Rotor aus einem Rotorblechpaket besteht bzw. dieses aufweist, wodurch das erfindungsgemäße Scheibenelement besonders effektiv zum Aneinanderdrücken mehrerer das Rotorblechpaket bildender Blechsegmente eingesetzt ist.

**In** anderen Worten ausgedrückt, ist erfindungsgemäß ein Multifunktionsblech für einen Rotor einer E-Maschine (Elektrische Maschine) realisiert. Das Multifunktionsblech des Rotors der elektrischen Maschine weist eine Struktur zum Integrieren dreier verschiedener Funktionen auf, nämlich die Funktion eines Signalgebers (Geberkontur) eines Wirbelstromsensors, das Unterbinden eines Aufblätterns an einem Außendurchmesser während des Betriebes sowie die Fluidversorgung zu einem Stator der elektrischen Maschine hin, um eine Kühlung zu erzielen.

Die Erfindung wird nun nachfolgend anhand von Figuren näher erläutert.

Es zeigen:
- Fig. 1: eine Längsschnittdarstellung einer teilweise dargestellten erfindungsgemäßen elektrischen Maschine nach einem bevorzugten Ausführungsbeispiel, wobei ein einen Rotor der elektrischen Maschine kontaktierendes Scheibenelement gut zu erkennen ist,
- Fig. 2: eine an dem Rotor im Betrieb anliegende Seite des Scheibenelements nach Fig. 1,
- Fig. 3: eine dem Rotor abgewandte Seite des Scheibenelementes,
- Fig. 4: eine Längsschnittdarstellung des Scheibenelementes,
- Fig. 5: eine Längsschnittdarstellung eines ebenfalls in Fig. 1 eingesetzten Fluidleitelementes,
- Fig. 6: eine im Betrieb dem Rotor abgewandte Seite des Fluidleitelementes nach Fig. 5 sowie
- Fig. 7: eine im Betrieb an dem Rotor anliegende Seite des Fluidleitelementes nach Fig. 5.

Die Figuren sind lediglich schematischer Natur und dienen ausschließlich dem Verständnis der Erfindung. Die gleichen Elemente sind mit denselben Bezugszeichen versehen.

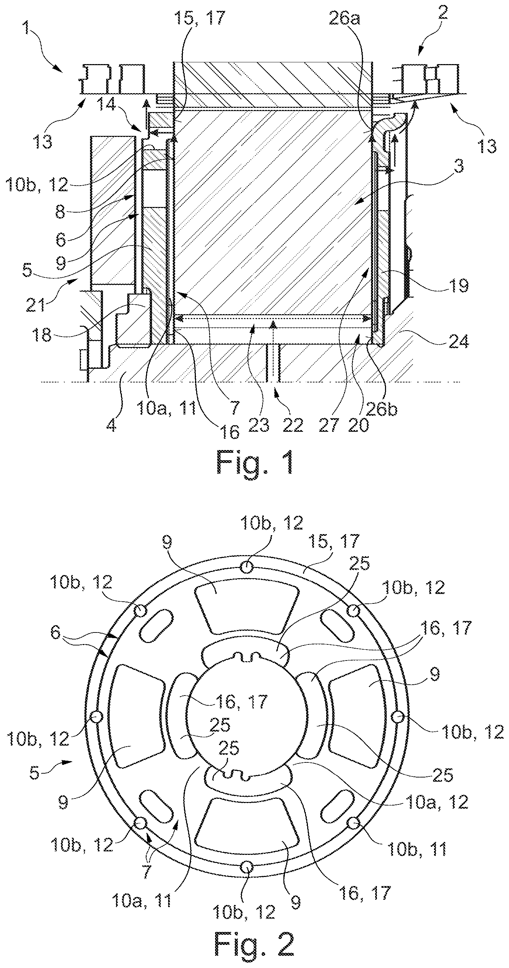

Eine erfindungsgemäße elektrische Maschine 1 ist in Fig. 1 in ihrem prinzipiellen Aufbau besonders gut zu erkennen. Die elektrische Maschine 1 ist in ihrem bevorzugten Betriebszustand in einem Hybridgetriebe eines hier der Übersichtlichkeit halber nicht weiter dargestellten Kraftfahrzeugantriebsstrangs eingesetzt. Die elektrische Maschine 1 dient dabei auf typische Weise zum unterstützenden Antrieb eines Hybridfahrzeuges. Auch ist die elektrische Maschine 1 gemäß weiteren Ausführungen in einem rein elektrisch angetriebenen Kraftfahrzeug einsetzbar.

Die elektrische Maschine 1 weist einen gehäusefest angeordneten Stator 2 auf. Ein als Innenläufer ausgebildeter Rotor 3 ist radial innerhalb des Stators 2 drehbar gelagert. Der Rotor 3 ist drehfest auf einer Triebwelle 4 angebracht. Der Rotor 3 ist axial von außen auf die Triebwelle 4 aufgesetzt und mittels einer in Fig. 1 lediglich hinsichtlich ihrer Position angedeuteten Verzahnung 20 (Kerbverzahnung) verbunden. Die Triebwelle 4 ist im Betrieb weiter mit einer Getriebewelle des Hybridgetriebes gekoppelt oder koppelbar.

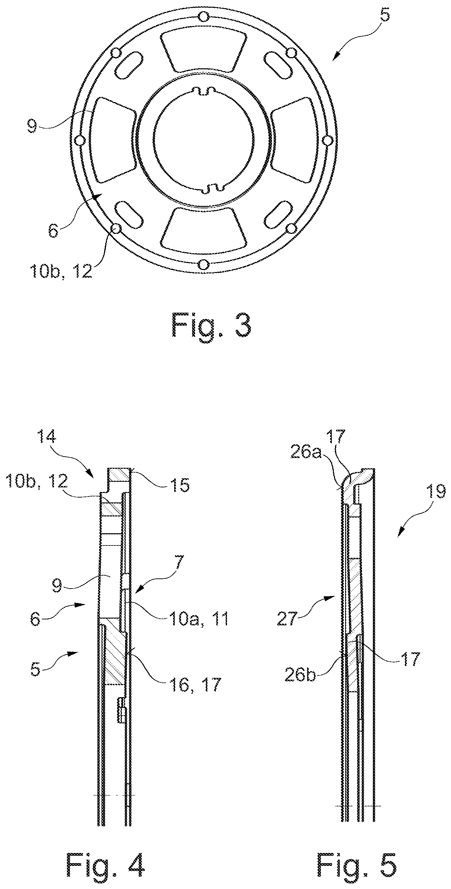

Zur axialen Sicherung des Rotors 3 relativ zu der Triebwelle 4 ist zu einer ersten axialen Seite des Rotors 3 ein erfindungsgemäß ausgebildetes Scheibenelement 5 angeordnet. Das Scheibenelement 5 realisiert mehrere Funktionen. Das Scheibenelement 5 ist als ein Stanzteil gefertigt. Zum einen ist das Scheibenelement 5 als ein Geberrad für eine Sensoreinrichtung 21 ausgestaltet. Das Scheibenelement 5 weist daher eine Geberkontur 6 auf, welche Geberkontur 6 sich mit der Sensoreinrichtung 21, die weiterhin einen hier der Übersichtlichkeit nicht näher dargestellten Wirbelstromsensor aufweist, in Wirkzusammenhang befindet. Die Geberkontur 6, wie auch in den Fign. 2 und 3 zu erkennen, ist durch mehrere in Umfangsrichtung gleichmäßig verteilt angeordnete Fenster 9 umgesetzt (Fenster in Fig. 1 nur hinsichtlich ihrer radialen Position angedeutet). Die Geberkontur 6 ist derart ausgebildet und wirkt im Betrieb derart mit der Sensoreinrichtung 21 zusammen, dass eine Winkellage / Drehposition sowie weiter bevorzugt eine Drehzahl des Rotors 3 detektierbar ist.

Als weitere Funktion ist das Scheibenelement 5 prinzipiell so ausgebildet, dass es mit einer axialen Vorspannkraft an dem Rotor 3 angedrückt ist. Das Scheibenelement 5 ist in Gänze als ein Federelement / eine Federscheibe realisiert. Hierzu weist das Scheibenelement 5 eine konische Ausformung auf. Es sind zwei Kontaktflächen 15, 16 an dem Scheibenelement 5 vorhanden, die in der axialen Richtung der Triebwelle 4 an dem Rotor 3 an seiner Stirnseite 8 (erste axiale Seite) anliegen. Eine erste Kontaktfläche 15 ist ringförmig und verläuft in einer Umfangsrichtung durchgängig um die Triebwelle 4 herum. Eine zweite Kontaktfläche 16 ist radial innerhalb der ersten Kontaktfläche 15 ausgebildet und in mehrere in Umfangsrichtung verteilt angeordnete Flächensegmente 25 unterteilt.

Aufgrund der konischen Erstreckung des Scheibenelementes 5 ist die zweite Kontaktfläche 16 in Bezug zu einer senkrecht zur Triebwelle 4 ausgerichteten Vergleichsebene im unmontierten Zustand konisch angestellt. Die radial außerhalb der zweiten Kontaktfläche 16 ausgebildete erste Kontaktfläche 15 ist ebenfalls konisch angestellt. Diese konischen Kontaktflächen 15, 16 sind in Fig. 4 auch gut zu erkennen. Bei der Montage kommt es gemäß Fig. 1 zu einem Heranbewegen der zweiten Kontaktfläche 16 zu dem Rotor 3 hin über einen weiteren Weg als für die erste Kontaktfläche 15. Somit kommt es zu einem elastischen Vorspannen des Scheibenelementes 5 und zu einem Aufbringen einer Vorspannkraft, die unmittelbar auf den Rotor 3 wirkt. Ein als Mutter realisiertes Befestigungsmittel 18 drückt das Scheibenelement 5 mit der zweiten Kontaktfläche 16 auf die gleiche axiale Höhe wie die erste Kontaktfläche 15, sodass der Rotor 3 in axialer Richtung mit der Vorspannkraft beaufschlagt ist. Das Befestigungsmittel 18 ist auf einer dem Rotor 3 abgewandten Seite des Scheibenelementes 5 auf der Triebwelle 4 unmittelbar befestigt, nämlich aufgeschraubt. Zur planen Anlage des Befestigungsmittels 18 an dem Scheibenelement 5 ist dieses mit einer ebenen, d.h. sich senkrecht zu der Triebwelle 4 erstreckenden Anlagefläche (mittels Drehbearbeitung) versehen.

Des Weiteren erfüllt das Scheibenelement 5 die Funktion einer Kühlmittelleitung. Das Scheibenelement 5 weist zu diesem Zwecke eine Kühlmittelleitkontur 7 zur Umlenkung / Umleitung eines Kühlmittelstromes im Betrieb auf. Ein erster Abschnitt 10a der Kühlmittelleitkontur 7 verläuft in radialer Richtung und ist durch eine axiale Aussparung 11 (auch als Freiraum bezeichnet) zwischen dem Rotor 3 und dem Scheibenelement 5 gebildet. Wie in Fig. 2 ersichtlich, sind in Umfangsrichtung zwischen je zwei prägetechnisch ausgebildeten, die Flächensegmente 25 darstellenden Verformungen 17 Passagen der Kühlmittelleitkontur 7 vorhanden, die ein Strömen des Kühlmittels in radialer Richtung an ihnen vorbei gestatten. Der erste Abschnitt 10a ist mit einer Zuführung 22 verbunden. Der erste Abschnitt 10a ist insbesondere über eine axial verlaufende sowie zwischen dem Rotor 3 und der Triebwelle 4 ausgebildeten Nut / Ausnehmung 23 mit der Zuführung 22 gekoppelt. Auf einer radialen Außenseite des ersten Abschnittes 10a geht die Kühlmittelleitkontur 7 in einen zweiten Abschnitt 10b unmittelbar über. Der zweite Abschnitt 10b ist durch mehrere in Umfangsrichtung verteilt angeordnete Durchgangslöcher 12 realisiert. Der zweite Abschnitt 10b ist in radialer Richtung von außen unmittelbar durch die erste Kontaktfläche 15 begrenzt. Dadurch kommt es zu einem Strömen des Kühlmittels im Betrieb von dem Rotor 3 axial weg, durch das jeweilige Durchgangsloch 12 hindurch. Das Kühlmittel tritt an einem Austritt 14 der Kühlmittelleitkontur 7 in axialer Richtung derart zur Umgebung hin aus, dass es unter Fliehkrafteinfluss im Betrieb in radialer Richtung zu verschiedenen Windungen 13 des Stators 2 hin befördert wird.

Auf einer zweiten axialen Seite, d. h. auf einer dem Scheibenelement 5 abgewandten axialen Seite des Rotors 3, ist ein Fluidleitelement 19 angeordnet. Das Fluidleitelement 19 ist in Verbindung mit den Fign. 5 bis 7 detailliert erkennbar und bildet ein weiteres (zweites) Scheibenelement aus. Das Fluidleitelement 19 ist in axialer Richtung zwischen einem radialen Absatz 24 der Triebwelle 4 und dem Rotor 3 eingespannt.

Die Einspannung erfolgt auf typische Weise mittels des Befestigungsmittels 18, das den Zusammenbau aus Scheibenelement 5, Rotor 3 und Fluidleitelement 19 gegen den Absatz 24 andrückt. Das Fluidleitelement 19 ist im Aufbau, sofern nicht nachfolgend anders beschrieben, gleich dem Scheibenelement 5 aufgebaut.

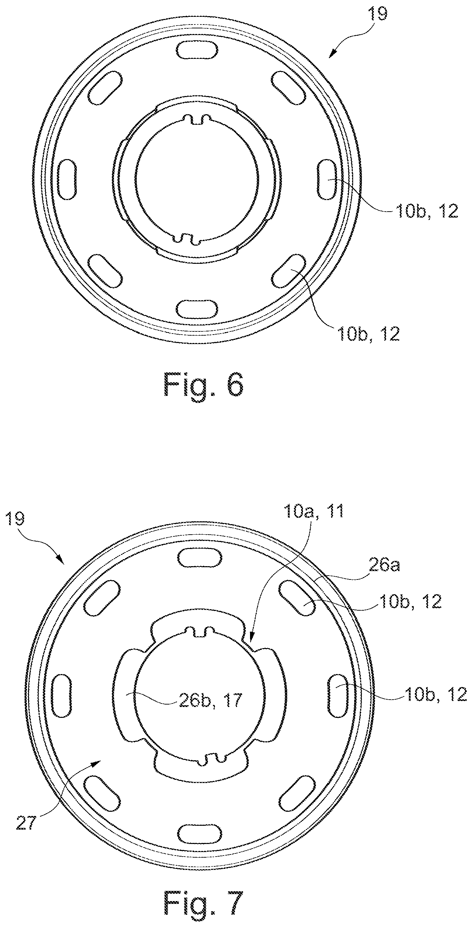

Das Fluidleitelement 19 weist demnach ebenfalls eine Kühlmittelleitkontur 27 auf, wie in den Fign. 6 und 7 zu erkennen. Die Kühlmittelleitkontur 27 des Fluidleitelementes 19 ist mit einem ersten Abschnitt 10a versehen, der weiter mit der Zuführung 22 verbunden ist. Mit dem ersten Abschnitt 10a ist ein zweiter Abschnitt 10b in Form eines Durchgangsloches 12 verbunden, um das Kühlmittel zu Windungen 13 des Stators 2 umzuleiten.

Zwei ähnlich den Kontaktflächen 15, 16 des Scheibenelementes 5 ausgebildete Kontaktflächen 26a, 26b sind in dieser Ausführung mittels Tiefziehen und Prägen realisiert. Die durch eine Verformung 17 gebildete erste Kontaktfläche 26a ist durch Tiefziehen erzielt, während die durch eine Verformung 17 gebildete zweite Kontaktfläche 26b durch Prägen erzielt ist. Das Fluidleitelement 19 ist in seiner Breite kleiner dimensioniert als das Scheibenelement 5. Des Weiteren, wie aus Fig. 5 ersichtlich, weist das Fluidleitelement 19 eine konische Erstreckung auf. Demnach ist auch eine zweite Kontaktfläche 26b des Fluidleitelementes 19 im unmontierten Zustand konisch zu einer senkrecht zur Triebwelle 4 verlaufenden Vergleichsebene angestellt. Bei Andrücken der Kontaktflächen 26a, 26b des Fluidleitelementes 19 an den Rotor 3 dient das Fluidleitelement 19 als Vorspannelement und bringt demnach eine weitere Vorspannkraft auf den Rotor 3 auf. Gegenüber dem Scheibenelement 5 ist jedoch vorzugsweise auf eine Geberkontur 6 verzichtet.

In anderen Worten ausgedrückt, besteht die erfinderische Lösung in speziellen Ausbildung eines einzigen runden Blechteiles (Scheibenelement 5). Die Bleche 5 enthalten im Wesentlichen gestanzte Fenster 9 für den Signalgeber 6, Prägungen 17 und Öffnungen 12 für die Ölleitung und sie wirken als Axialfeder zum axialen Zusammenhalten der Rotorbleche. Detaillierter betrachtet, befindet sich das Blechteil 5 auf der gleichen Welle 4 wie der Rotor 3 der E-Maschine 1. Das Drehmoment wird durch Nuten in der Welle 4 und entsprechende Nasen im Blechteil 5 durch Formschluss übertragen.

Eine Mutter 18 verspannt das Blechteil 5 mit dem Rotor 3. Somit rotiert das Blech 5 mit der gleichen Drehzahl wie der Rotor 3. Die Signalgebefunktion wird durch mehrere gestanzte Fenster 9 im Blechteil 5realisiert. Um die Signalgüte nicht negativ zu beeinflussen, ist ein bestimmter Abstand zwischen Signalgeber 6 und Rotor 3 notwendig. Damit der Abstand eingehalten werden kann, wird das Blech 5 innen und außen geprägt. Die Prägungen 17 helfen zusätzlich bei der Ölverteilung. Das Öl fließt durch die Welle 4 und gelangt durch vier gleichmäßig am Umfang verteilte Bohrungen an den Rotor 3. Durch eine Nut im Rotor 23 wird das Öl nach rechts und links zu den Blechen 5, 19 geleitet. Durch die Prägungen 17 im Blech 5 entsteht lokal ein Hohlraum zwischen Rotor 3 und Blech 5. Durch diesen Hohlraum wird das Öl durch die Fliehkraft radial nach außen geleitet. Am Außendurchmesser staut sich das Öl und fließt durch mehrere gestanzte Löcher 12 aus dem Blech 5 heraus. Die Fliehkraft sorgt dafür, dass das Öl an die Wicklungen 13 der Statoren 2 spritzt. Durch das Ausfließen aus den Löchern 12 wird sichergestellt, dass das Öl mit einem Abstand zum Luftspalt der E-Maschine 1 von mindestens Blechdicke an den Wicklungen 13 auftrifft. Dadurch wird verhindert, dass zu viel Öl in den Luftspalt zwischen Stator 2 und Rotor 3 gelangt. Auf der rechten Seite des Rotors 3 wird ebenfalls ein Blech 19 benötigt. Dieses hat die gleiche Ölleitfunktion, wie zuvor beschrieben. Der Unterschied besteht darin, dass bei diesem Blech 19 der Abstand zum Luftspalt geringer ist, aufgrund der geringeren Blechdicke. Deshalb wird das Blech 19 am Außendurchmesser tiefgezogen. Das Öl fließt aus den Öffnungen 12 für die Wuchtbohrungen. Zusätzliche Löcher für den Ölfluss sind hier nicht notwendig, da hier kein Sensor vorhanden ist, der den Ölfluss behindert. Die Signalgeberfunktion entfällt bei diesem Blech 19, da die Rotorlage bereits durch das andere Blech 5 bestimmt wird. Die dritte Funktion ist das axiale Zusammenhalten der Rotorbleche am Außendurchmesser. Nach dem Stanzen und Prägen werden beide Bleche 5, 19 leicht aufgestellt / konisch geformt. Das aufgestellte Blech 5 wird durch die Mutter 18 plan an den Rotor 3 gedrückt. Das Blech 5 verhält sich wie eine Feder. Somit ist sichergestellt, dass am Außendurchmesser immer eine Kraft gegen den Rotor 3 wirkt. Ein Aufblättern ist so nicht mehr möglich. Eine zusätzliche Drehbearbeitung an den Blechen 5, 19 sorgt für eine ebene Anlagefläche für die Mutter.

### Bezugszeichenliste

- 1: elektrische Maschine
- 2: Stator
- 3: Rotor
- 4: Triebwelle
- 5: Scheibenelement
- 6: Geberkontur
- 7: Kühlmittelleitkontur
- 8: Stirnseite
- 9: Fenster
- 10a: erster Abschnitt
- 10b: zweiter Abschnitt
- 11: Aussparung
- 12: Durchgangsloch
- 13: Windung
- 14: Austritt
- 15: erste Kontaktfläche
- 16: zweite Kontaktfläche
- 17: Verformung
- 18: Befestigungsmittel
- 19: Fluidleitelement
- 20: Verzahnung
- 21: Sensoreinrichtung
- 22: Zuführung
- 23: Ausnehmung
- 24: Absatz
- 25: Flächensegment
- 26a: erste Kontaktfläche des Fluidleitelementes
- 26b: zweite Kontaktfläche des Fluidleitelementes
- 27: Kühlmittelleitkontur des Fluidleitelementes

## Patentansprüche

1. Elektrische Maschine (1) für einen Kraftfahrzeugantriebsstrang, mit einem Stator (2), einem relativ zu dem Stator verdrehbar gelagerten Rotor (3) sowie einer den Rotor (3) drehfest aufnehmenden Triebwelle (4), wobei in einer axialen Richtung der Triebwelle (4) neben dem Rotor (3) ein aus einem Metallblech bestehendes, ebenfalls drehfest mit der Triebwelle (4) verbundenes Scheibenelement (5) angeordnet ist, wobei das Scheibenelement (5) eine durch einen Sensor erfassbare Geberkontur (6) und eine Kühlmittelleitkontur (7) zur Umlenkung eines Kühlmittelstromes zu dem Stator (2) hin aufweist sowie mit einer axialen Vorspannkraft gegen eine Stirnseite (8) des Rotors (3) angedrückt ist, und eine erste Kontaktfläche (15) des Scheibenelementes (5) die Kühlmittelleitkontur (7) radial von außen begrenzt, **dadurch gekennzeichnet, dass** der Sensor als Wirbelstromsensor ausgebildet ist, eine zweite Kontaktfläche (16) des Scheibenelementes (5) in einem demontierten Ausgangszustand des Scheibenelementes (5) betrachtet eine konische Erstreckung aufweist, und zumindest eine der an dem Rotor (3) axial anliegenden Kontaktflächen (15, 16) des Scheibenelementes (5) durch eine präge- oder tiefziehtechnisch erzielte Verformung (17) ausgebildet ist.

2. Elektrische Maschine (1) nach Anspruch 1, **dadurch gekennzeichnet, dass** die Geberkontur (6) zumindest ein Fenster (9) aufweist.

3. Elektrische Maschine (1) nach Anspruch 1 oder 2, **dadurch gekennzeichnet, dass** die Kühlmittelleitkontur (7) in einem ersten Abschnitt (10a) durch eine Aussparung (11) an einer dem Rotor (3) zugewandten Seite des Scheibenelementes (5) ausgebildet ist.

4. Elektrische Maschine (1) nach einem der Ansprüche 1 bis 3, **dadurch gekennzeichnet, dass** die Kühlmittelleitkontur (7) in einem zweiten Abschnitt (10b) durch zumindest ein axiales Durchgangsloch (12) ausgebildet ist.

5. Elektrische Maschine (1) nach einem der Ansprüche 1 bis 4, **dadurch gekennzeichnet, dass** der Stator (2) mit zumindest einer Windung (13) radial außerhalb eines Austritts (14) der Kühlmittelleitkontur (7) angeordnet ist.

6. Elektrische Maschine (1) nach einem der Ansprüche 1 bis 5, **dadurch gekennzeichnet, dass** das Scheibenelement (5) unter elastischer Vorspannung mittels eines an der Triebwelle (4) abgestützten Befestigungsmittels (18) gegen den Rotor (3) angedrückt ist.

7. Elektrische Maschine (1) nach einem der Ansprüche 1 bis 6, **dadurch gekennzeichnet, dass** auf einer dem Scheibenelement (5) axial abgewandten Seite des Rotors (3) ein Fluidleitelement (19) angeordnet ist.

## Claims

1. An electrical machine (1) for a motor vehicle drive train, having a stator (2), a rotor (3) which is rotatably mounted relative to the stator and a drive shaft (4) receiving the rotor (3) in a rotationally fixed manner, wherein a disc element (5) consisting of a metal sheet and likewise rotationally fixedly connected to the drive shaft (4) is arranged next to the rotor (3) in an axial direction of the drive shaft (4), wherein the disc element (5) has a transmitter contour (6) that can be detected by a sensor and a coolant guiding contour (7) for deflecting a coolant flow towards the stator (2), and is pressed against an end face (8) of the rotor (3) with an axial prestressing force, and a first contact surface (15) of the disc element (5) delimits the coolant guiding contour (7) radially from the outside, **characterised in that** the sensor is designed as an eddy current sensor, a second contact surface (16) of the disc element (5) has a conical extension when viewed in a disassembled initial state of the disc element (5), and at least one of the contact surfaces (15, 16) of the disc element (5) axially abutting the rotor (3) is formed by a deformation (17) achieved by stamping or deep-drawing technology.

2. The electrical machine (1) according to claim 1, **characterised in that** the transmitter contour (6) has at least one window (9).

3. The electrical machine (1) according to claim 1 or 2, **characterised in that** the coolant guiding contour (7) is formed in a first section (10a) by a recess (11) on a side of the disc element (5) facing the rotor (3).

4. The electrical machine (1) according to one of claims 1 to 3, **characterised in that** the coolant guiding contour (7) is formed in a second section (10b) by at least one axial through-hole (12).

5. The electrical machine (1) according to one of claims 1 to 4, **characterised in that** the stator (2) is arranged with at least one winding (13) radially outside an outlet (14) of the coolant guiding contour (7).

6. The electrical machine (1) according to one of claims 1 to 5, **characterized in that** the disc element (5) is pressed against the rotor (3) under elastic prestress by means of a fastening means (18) supported on the drive shaft (4).

7. The electrical machine (1) according to one of claims 1 to 6, **characterised in that** a fluid guiding element (19) is arranged on a side of the rotor (3) axially facing away from the disc element (5).

## Revendications

1. Machine électrique (1) pour une chaîne cinématique de véhicule automobile, comprenant un stator (2), un rotor (3) monté rotatif par rapport au stator et un arbre d'entraînement (4) recevant le rotor (3) solidaire en rotation, dans laquelle un élément de disque (5), constitué d'une tôle métallique et également relié solidaire en rotation de l'arbre d'entraînement (4), est agencé à côté du rotor (3) dans un sens axial de l'arbre d'entraînement (4), dans laquelle l'élément de disque (5) présente un contour de détecteur (6) pouvant être détecté par un capteur et un contour de guidage de liquide de refroidissement (7) pour dévier un flux de liquide de refroidissement vers le stator (2), et est pressé contre une face frontale (8) du rotor (3) par une force de précontrainte axiale et une première surface de contact (15) de l'élément de disque (5) délimite radialement le contour de guidage de liquide de refroidissement (7) depuis l'extérieur, **caractérisée en ce que** le capteur est conçu comme un capteur à courants de Foucault, une seconde surface de contact (16) de l'élément de disque (5) présente une extension conique lorsqu'elle est vue dans un état initial démonté de l'élément de disque (5), et au moins une des surfaces de contact (15, 16) de l'élément de disque (5) en butée axiale contre le rotor (3) est formée par une déformation (17) obtenue par une technologie d'emboutissage ou d'emboutissage profond.

2. Machine électrique (1) selon la revendication 1, **caractérisée en ce que** le contour de détecteur (6) présente au moins une fenêtre (9).

3. Machine électrique (1) selon la revendication 1 ou 2, **caractérisée en ce que** le contour de guidage de liquide de refroidissement (7) est formé dans une première section (10a) par un évidement (11) sur un côté de l'élément de disque (5) tourné vers le rotor (3).

4. Machine électrique (1) selon l'une des revendications 1 à 3, **caractérisée en ce que** le contour de guidage de liquide de refroidissement (7) est formé dans une seconde section (10b) par au moins un trou traversant axial (12).

5. Machine électrique (1) selon l'une des revendications 1 à 4, **caractérisée en ce que** le stator (2) est agencé avec au moins un enroulement (13) radialement à l'extérieur d'une sortie (14) du contour de guidage de liquide de refroidissement (7).

6. Machine électrique (1) selon l'une des revendications 1 à 5, **caractérisée en ce que** l'élément de disque (5) est pressé contre le rotor (3) sous précontrainte élastique par le biais d'un moyen de fixation (18) prenant appui sur l'arbre d'entraînement (4).

7. Machine électrique (1) selon l'une des revendications 1 à 6, **caractérisée en ce qu'un** élément de guidage de fluide (19) est agencé sur un côté du rotor (3) axialement opposé à l'élément de disque (5).
